# FASCICULE DE BREVET EUROPEEN

(11) **EP 3 430 669 B1**
(45) Date de publication et mention de la délivrance du brevet: **15.01.2020**
(21) Numéro de dépôt: 16710959.4
(22) Date de dépôt: 15.03.2016
(51) Int. Cl.: H01M 8/242, H01M 8/04014, H01M 8/2465, H01M 8/04089

(54) **PROCÉDÉ ET MACHINE DE FABRICATION D'UNE PILE À COMBUSTIBLE ENROULÉE**
VERFAHREN UND MASCHINE ZUR HERSTELLUNG EINER GEWICKELTEN BRENNSTOFFZELLE
METHOD AND MACHINE FOR MANUFACTURING A WOUND FUEL CELL

(43) Date de publication de la demande: 23.01.2019
(73) Titulaire: Pragma Industries, 64200 Biarritz (FR)
(72) Inventeur: ABADIE, Mario, 64600 Anglet (FR); FORTE, Pierre, 64200 Biarritz (FR)
(74) Mandataire: Schmit, Christian Marcel Jean
(86) Numéro de dépôt international: PCT/EP2016/055596
(87) Numéro de publication internationale: WO 2016/150775

(56) Documents cités:
- WO-A1-2011/124863
- WO-A1-2013/164438

## Description

### Domaine de l'invention

La présente invention concerne un procédé et un machine de fabrication des piles à combustibles du type enroulées comportant un complexe pourvu en particulier d'un feuillard de tension ou feuillard support, d'un conduit hydrogène, une bande porteuse de cellules électrochimiques en série et une bande séparatrice pourvue de canaux de passage d'air transversaux par rapport à l'axe longitudinal de la bande porteuse des cellules. L'invention concerne en outre la pile obtenue par ce procédé et les éléments constitutifs de cette pile.

### Arrière plan technologique

Des exemples de piles à combustible sont par exemple décrits dans les documents EP 1 846 976 B1, EP 2 556 555 B1, WO 2011/124863 A1, WO 2013/164438 A1 et les demandes FR13 62685, FR13 62687 et FR13 62689 déposées le 16/12/2013 tous au nom de la demanderesse et incorporés ici par référence.

Pour de telles piles, la régularité de l'enroulement des couches, la régularité de la pression sur les cellules et sur les bandelettes traversant la bande porteuse et reliant les cellules électrochimiques de la bande porteuse en série et l'étanchéité au niveau des connecteurs fluidiques et électriques, sont des points primordiaux.

Dans ce cadre, la présente invention a pour objectif de réaliser un procédé et une machine de fabrication de piles enroulées qui assure un positionnement correct des éléments de la pile notamment au niveau des connecteurs en sorte de garantir une bonne étanchéité et une tension contrôlée de l'enroulement des bandes constituant la pile.

### Brève description de l'invention

Pour ce faire la présente invention propose en premier lieu un procédé de fabrication d'une pile à combustible enroulée comprenant:
- un feuillard support,
- une bande isolante anodique,
- une bande de diffusion H₂,
- une bande porteuse de cellules électrochimiques dont les anodes sont d'un premier côté de la bande porteuse et les cathodes d'un second côté de la bande porteuse, et
- une bande séparatrice cathodique ondulée,
pour lequel le procédé comprend:
- une étape de réalisation d'un mandrin de bobinage comportant un dispositif de raccordement fluidique et de raccordement électrique d'une première extrémité de la pile et comportant l'assemblage d'une extrémité de début du feuillard support avec une bride de maintien solidaire d'un axe de bobinage de la pile, le mandrin équipé de la bride de maintien recevant des premières terminaisons desdits feuillard support, bande isolante anodique, bande de diffusion H₂, bande porteuse de cellules électrochimiques et bande séparatrice cathodique ondulée,
- une étape de bobinage de la pile pour laquelle la tension du feuillard support entre un dérouleur et le mandrin est asservie en sorte d'appliquer une pression calibrée sur les couches bobinées de la pile.

Avantageusement, l'étape de réalisation du mandrin comporte:
- une étape de réalisation d'un premier sous ensemble comportant l'assemblage d'une extrémité de début du feuillard support avec une bride de maintien solidaire d'un axe de bobinage de la pile,
- une étape de réalisation d'un deuxième sous ensemble comportant l'assemblage d'une première extrémité de début de la bande isolante anodique, d'une première extrémité de la bande de diffusion H₂ et d'une première extrémité de la bande porteuse des cellules avec un dispositif de raccordement fluidique répartiteur H₂ et la réalisation d'un dispositif de connexion électrique d'une première électrode d'une première cellule de la bande porteuse avec un premier contact électrique sur un module compartiment H_{2/}connexion électrique,

- une étape de réalisation d'un troisième sous ensemble comprenant l'assemblage de la bande séparatrice cathodique ondulée sur un élément support cathode,
- une étape d'assemblage desdits sous ensembles, les deuxième et troisième sous ensembles étant assemblés de part et d'autre du premier sous ensemble pour former un mandrin autour duquel la pile est enroulée, le feuillard support étant relié au centre du mandrin en sorte d'assurer la tension de l'enroulement.

Préférablement, l'ensemble bande porteuse, bande de diffusion H₂ et bande isolante anodique est assemblé et collé en continu au niveau de son accostage sur le bobinage pendant l'enroulement de la pile.

Le dispositif de raccordement fluidique répartiteur H₂ étant pourvu d'au moins une lumière de distribution d'hydrogène, l'assemblage du deuxième sous ensemble comprend avantageusement l'assemblage étanche de l'extrémité de début de l'ensemble bande porteuse, bande de diffusion H₂ et bande isolante anodique sur ledit dispositif en communication avec la lumière pour réaliser le début d'un canal hydrogène côté anodes de la bande porteuse.

Les positions d'accostage du feuillard support, de l'ensemble bande isolante anodique, bande de diffusion H₂, bande porteuse de cellules et de la bande séparatrice cathodique ondulée sont avantageusement décalées angulairement.

Le procédé comporte avantageusement une étape de bobinage de la pile sur le nombre de tours choisi en fonction de la tension électrique de sortie souhaitée pour la pile.

Selon un mode de réalisation avantageux, la tension mécanique du feuillard support est régulée au long du bobinage pour homogénéiser la compression des couches de la pile.

La tension du feuillard support est préférablement proportionnelle au rayon de la pile pendant son enroulement pour obtenir une compression constante entre les couches de l'enroulement.

Une fois le bobinage terminé le procédé comporte avantageusement:
- une étape de coupe d'une extrémité de fin de la bande isolante anodique, de la bande de diffusion H₂ et de la bande porteuse des cellules électrochimiques;
- une étape d'assemblage de ces extrémités sur un second module compartiment H_{2/}connexion électrique de terminaison de pile comportant un second dispositif de raccordement fluidique répartiteur H₂ réalisant la fermeture du canal fluidique H₂;
- une étape de raccordement de la dernière électrode de la dernière cellule de la bande porteuse de polarité opposée à ladite première électrode avec un second contact électrique porté par ledit second module.
   , et
- une étape de positionnement dudit second module sur la pile enroulée.

Avantageusement, une fois le second module positionné sur la pile, la rotation du mandrin est poursuivie pour recouvrir ledit second module compartiment H_{2/}connexion électrique avec la bande séparatrice ondulée et avec le feuillard support.

Le procédé comporte en outre avantageusement une étape de coupe de la bande séparatrice ondulée et de réalisation d'au moins un tour supplémentaire avec le feuillard support encollé en sorte de créer une enveloppe de contention de la pile avant de couper ledit feuillard support pour finaliser la pile à combustible.

Le second module compartiment H_{2/}connexion électrique peut notamment être monté sur une embase s'appliquant sur la pile enroulée.

L'invention propose en outre un dispositif d'enroulement d'une pile à combustible comportant un mandrin regroupant une bride de maintien pourvue d'un axe de bobinage adaptée à recevoir le feuillard support de la pile, un module compartiment H_{2/}connexion électrique de réception d'une première extrémité de début de la bande isolante anodique, d'une première extrémité de la bande de diffusion H₂ et d'une première extrémité de la bande porteuse des cellules, pourvu d'un premier dispositif de raccordement fluidique répartiteur H₂ et d'un dispositif de connexion électrique d'une première électrode d'une première cellule de la bande porteuse avec un premier contact électrique, un élément support cathode de réception de la bande séparatrice ondulée.

Le mandrin comporte avantageusement à sa surface un ou plusieurs décrochements au niveau des arrivées des bandes et feuillards, ces décrochements étant adaptés à compenser les épaisseurs des différentes couches pour obtenir un enroulement homogène de la pile.

Le dispositif de raccordement fluidique répartiteur H₂ est avantageusement pourvu d'au moins une lumière de distribution d'hydrogène et des moyens d'assemblage étanche de l'extrémité de début de l'ensemble bande porteuse, bande de diffusion H₂ et bande isolante anodique sur ledit dispositif en communication avec la lumière.

Le dispositif d'enroulement comporte préférablement un second module compartiment H_{2/}connexion électrique de terminaison de pile comportant un second dispositif de raccordement fluidique répartiteur H₂ réalisant la fermeture du canal fluidique H₂ et un second contact électrique porté par ledit second module.

Le second dispositif de raccordement peut notamment comporter des pièces identiques à celles du premier pour réduire le nombre de moules nécessaire à la réalisation de ces pièces.

### Brève description des dessins

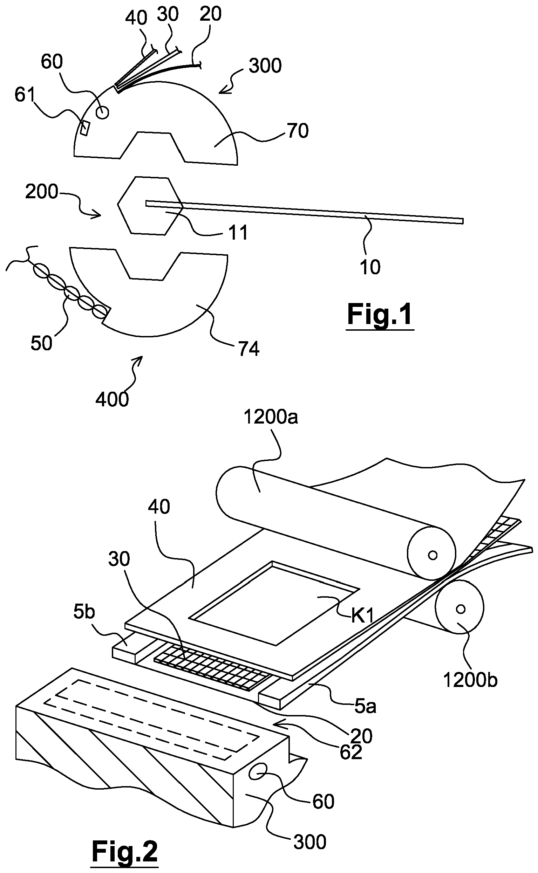

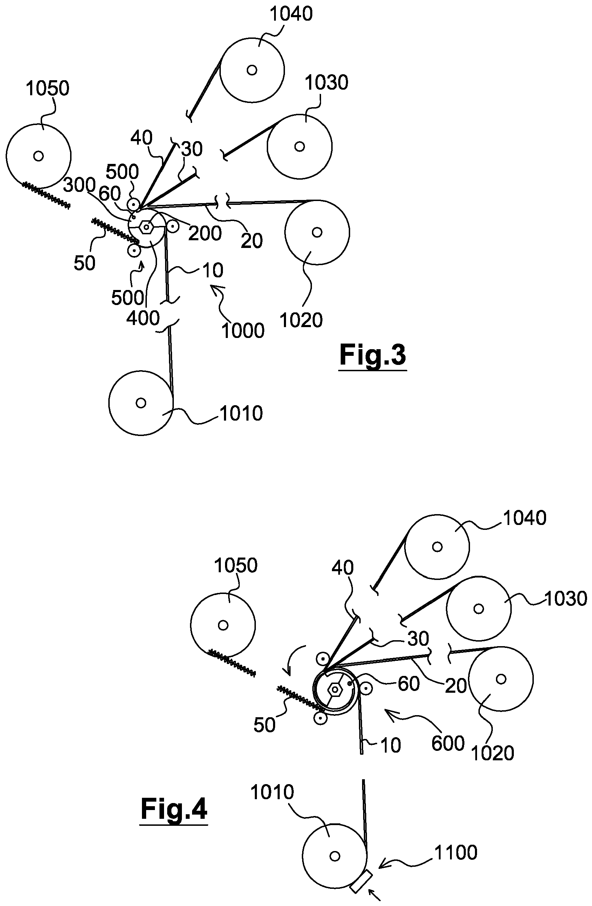

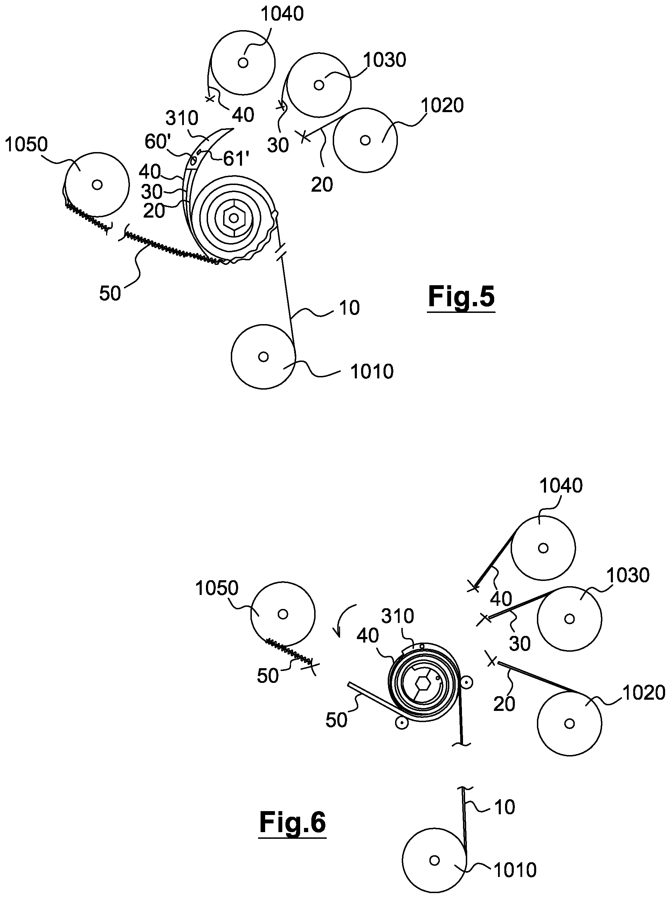

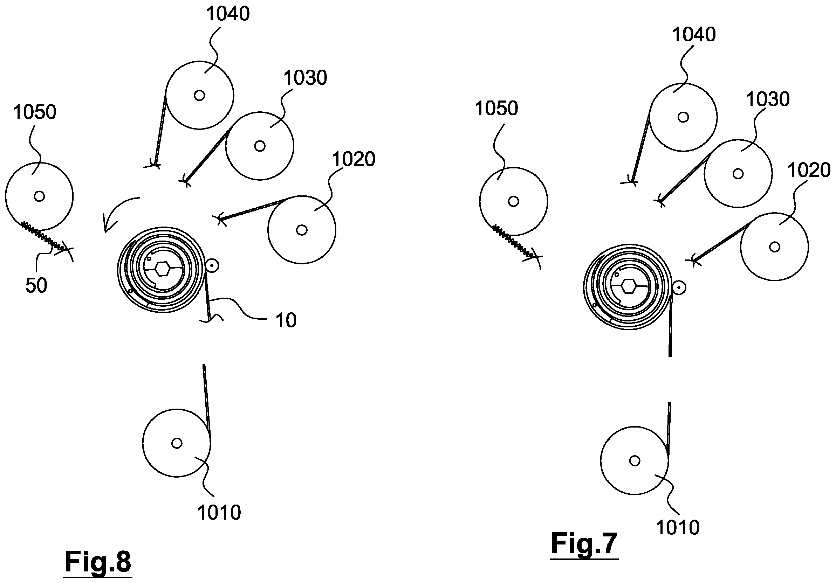

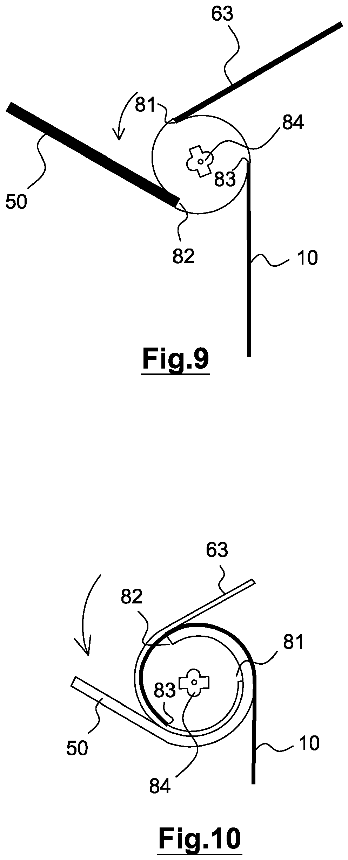

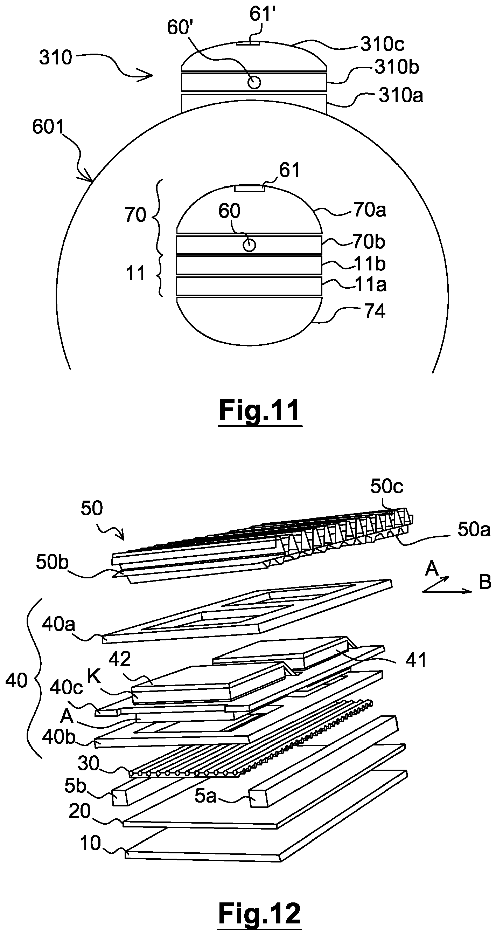

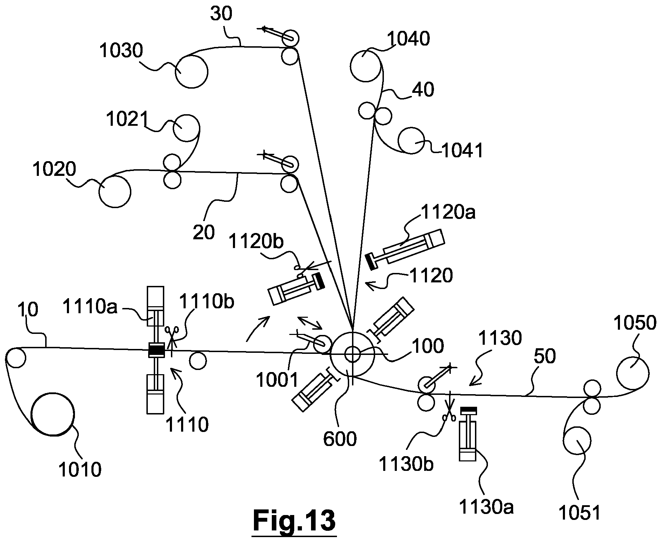

D'autres caractéristiques et avantages de l'invention seront apparents à la lecture de la description qui suit d'un exemple non limitatif de réalisation de l'invention en référence aux dessins qui représentent:
En figure 1: une vue éclaté de côté d'un assemblage d'un mandrin de bobinage d'une pile de l'invention;
En figure 2: une vue d'un détail de la réalisation d'un premier sous ensemble de l'invention;
En figure 3: une vue schématique d'une étape de réalisation d'un mandrin de bobinage de l'invention;
En figure 4: une vue schématique d'une étape de début d'enroulement du procédé de l'invention;
En figure 5: une vue schématique d'une étape de réalisation d'une terminaison d'une pile selon une étape du procédé de l'invention;
Aux figures 6, 7 et 8: des vues schématique d'étapes de fin de réalisation d'une pile selon l'invention;
Aux figures 9 et 10: des vues schématiques d'un mandrin de l'invention;
En figure 11: une vue schématique des éléments fonctionnels d'une pile bobinée de l'invention;
En figure 12: une vue schématique d'un complexe de réalisation d'une pile enroulée selon le procédé de l'invention;
En figure 13: une vue schématique d'un exemple de machine de mise en oeuvre du procédé de l'invention;

### Description détaillée de modes de réalisation de l'invention

L'invention concerne une pile à combustible enroulée à partir d'un complexe qui comprend comme représenté en figure 12 un feuillard support 10, une bande isolante anodique 20, une bande de diffusion H₂ 30, ici sous forme d'une grille, une bande porteuse 40, comportant des cellules électrochimiques 41, qui est ici réalisée avec trois couches 40a, 40b, 40c.

Les cellules sont en série sur la bande et ont leurs anodes A d'un premier côté de la bande et leurs cathodes K d'un second côté de la bande, une anode précédente étant reliée électriquement à une cathode suivante par des moyens d'interconnexion des cellules sous forme de bandelettes 42 qui traversent la bande par des passages étanches.

Un conduit de transport d'hydrogène est constitué entre la bande isolante anodique 20 et la face portant les anodes A de la bande porteuse 40 au moyen de cales d'épaisseur 5a, 5b longeant les anodes de la bande porteuse et reliant ladite face et ladite bande isolante anodique 20.

Dans le conduit se trouve la bande de diffusion H₂ 30 entre la bande isolante anodique 20 et la bande porteuse des cellules 40.

Dans la présente invention, la bande isolante anodique 20 est séparée du feuillard support 10 qui a pour fonction de réguler la tension sur les cellules lors de l'enroulement.

Pour ce faire, le feuillard support 10 va être le cœur de l'enroulement et être solidarisé à l'axe d'enroulement de la pile solidaire de la bride de maintien. Le feuillard support 10 peut notamment être collé, riveté ou soudé entre deux parties 11a, 11b de la bride de maintien 11.

la bande isolante anodique 20 par exemple équipée des cales 5a, 5b de la figure 2, la bande de diffusion H₂ 30 et la bande porteuse 40 sont collées de manière à former un complexe garantissant l'étanchéité du canal de diffusion H₂. Pour éviter que le complexe collé gondole ou se plisse, le collage se fait au niveau de l'enroulement de ces éléments sur le mandrin pendant l'enroulement de la pile plutôt qu'à plat. Ceci permet d'éviter en effet que l'épaisseur du complexe cause un différentiel de longueur entre sa couche externe et sa couche interne de l'ensemble lors de l'enroulement du complexe.

Une bande séparatrice cathodique ondulée 50 côté cathodes de la bande porteuse 40 permet un passage d'air au niveau des cathodes de la bande porteuse pour le fonctionnement de la pile et permet un refroidissement de la pile. Ladite bande séparatrice 50 comprend selon l'exemple trois couches, constituées d'un premier feuillard ondulé 50a et d'un second feuillard ondulé 50c déposés et collés ou soudés sur les faces opposées d'un feuillard lisse central 50b.

Préférablement les trois feuillards sont métallique. En particulier le feuillard lisse est réalisé en acier ou dans un alliage d'aluminium présentant un faible coefficient d'extension soustraction longitudinale.

Le feuillard ondulé 50c sur la face en contact avec le feuillard support 10 est par exemple réalisé en alliage d'aluminium pour permettre une bonne dissipation de la chaleur produite par la pile et un bon échange thermique avec l'air circulant entre les ondulations par convexion, aspiration ou soufflage.

Dans le cas où le feuillard ondulé 50a en contact avec les cathodes est aussi métallique, il est recouvert par une couche isolante électrique sous forme d'un film ou d'un revêtement de surface pour ne pas créer de court circuit entre ces cathodes.

Le feuillard ondulé 50a côté cathodes peut toutefois être un feuillard réalisé dans un matériau plastique isolant électrique mais offrant tout de même une conduction thermique suffisante pour refroidir la face cathodique de la pile.

Les matériaux utilisés pour les feuillards ondulés doivent en outre être suffisamment résistants pour éviter un écrasement ou une déformation des ondulations lors du bobinage de la pile et de son utilisation.

Cette constitution de la bande séparatrice ondulée en trois couches offre plusieurs avantages.

En premier lieu, la bande séparatrice 50 bien qu'elle soit ondulée, ne peut pas s'écraser et est rendue pratiquement incompressible sous les pressions obtenues lors de l'enroulement de la pile du fait que les deux feuillards ondulés s'appuient sur le feuillard lisse central ce qui les empêche de s'étirer par effet ressort au niveau des ondulations. Le feuillard lisse central évite ainsi que la bande séparatrice s'allonge du fait de l'élasticité des feuillard ondulés lors de l'enroulement de la pile.

En second lieu, il est possible de faire varier le rapport d'air d'alimentation des cathodes passant entre les ondulations du premier feuillard ondulé 50a côté cathodes de la bande séparatrice par rapport au débit d'air de refroidissement passant dans les ondulations du second feuillard ondulé 50c de l'autre côté du feuillard lisse central 50b en choisissant des pas Pₐ, P_{c} et des hauteurs crête/crête hₐ, h_{c} différents entre les ondulations des deux feuillards ondulés 50a, 50c séparés par le feuillard lisse central.

Le but de cette différenciation débit d'air refroidissement/débit d'air cathodique permet d'avoir un flux d'air de refroidissement important tout en limitant le flux d'air cathodique pour ne pas assécher les cellules.

Il y a lieu de noter que les ondulations du premier feuillard ondulé 50a situées entre ce feuillard et le feuillard lisse participent au refroidissement de la pile dans une moindre mesure que les ondulations du second feuillard ondulé 50c.

En outre le pas Pₐ des ondulations du feuillard 50a en contact avec les cathodes va être choisi suffisamment petit pour réaliser plusieurs lignes de contact avec ces dernières pour accroître la surface d'appui du feuillard sur les cathodes pour garantir une bonne compression des cellules entre le feuillard support 10 et la bande séparatrice ondulée.

Avoir un pas réduit côté cathodes au niveau du feuillard 50a et un pas plus grand côté refroidissement au niveau du feuillard 50c permet en outre d'accroître la propension de la bande séparatrice à s'enrouler lorsque le feuillard 50a se trouve à l'intérieur de l'enroulement et le feuillard 50c à l'extérieur.

La pile est enroulée à partir d'un mandrin central représenté en éclaté en figure 1. Le mandrin central comporte un premier sous ensemble 200 qui comporte la bride de maintien 11 éventuellement en deux parties pour emprisonner le début du feuillard support 10. Le mandrin comporte au dessus de la bride de maintien sur la figure un deuxième sous ensemble 300 qui comporte un module compartiment H_{2/}connexion électrique 70 regroupant un dispositif de raccordement fluidique répartiteur d'hydrogène H₂ 60 permettant d'apporter de l'hydrogène dans un canal étanche de la pile côté anodes et un premier contact électrique 61 de raccordement d'une première électrode de la pile, anode ou cathode.

Le module compartiment H_{2/}connexion électrique 70 reçoit une première extrémité de début de la bande isolante anodique 20, une première extrémité de la bande de diffusion H₂ 30 et une première extrémité de la bande porteuse 40 des cellules, comme représenté en figure 2, où les couches sont montrées écartées pour le besoin du dessin, alors qu'elles sont en réalité assemblées et collées de manière étanche sur le dispositif de raccordement fluidique pour réaliser le canal étanche transportant l'hydrogène aux anodes de la pile. La bande de diffusion H₂ 30 et la bande isolante anodique 20, avec ses cales 5a, 5b autour de la bande de diffusion H₂, sont positionnées en face d'une lumière 62 de distribution d'hydrogène vue en pointillés pour débuter le canal qui va être réalisé entre la bande porteuse et la bande isolante anodique, ce canal contenant la bande de diffusion H₂. La lumière 62 fait partie du dispositif de raccordement fluidique répartiteur H₂ 60 qui reçoit par exemple un embout auquel un tube apporteur d'hydrogène non représenté est raccordé. Un dispositif presseur tel que par exemple les rouleaux 1200a, 1200b aide au collage des couches du canal hydrogène.

De retour à la figure 1, au dessous de la bride de maintien 11, le mandrin comporte un troisième sous ensemble 400 comprenant un élément support cathode 74 sur lequel est fixée la bande séparatrice cathodique ondulée 50 par exemple au moyen d'agrafes ou autres moyens de fixations tels que des pions s'insérant dans des trous en fin de bande.

Comme représenté en figure 3, les deuxième 300 et troisième 400 sous ensembles sont assemblés de part et d'autre du premier sous ensemble 200 pour former le mandrin autour duquel la pile est enroulée et le feuillard support est fixé au centre de l'enroulement en sorte d'assurer et de contrôler la tension de l'enroulement.

La surface extérieure du premier sous ensemble comportant le module compartiment H₂/raccordement électrique, et du troisième sous ensemble sont complémentaires pour former la surface du mandrin de bobinage de la pile. Les diverses parties constituantes du mandrin peuvent être collées ensemble ou comprendre des moyens d'assemblage tels que des clips portés par certains des éléments s'encliquetant dans des logements réalisés dans d'autres des éléments.

Les diverses couches de la pile, bande porteuse 40 assemblée avec au dessous la bande de diffusion H₂ 30 et la bande isolante anodique 20, feuillard support 10 et bande séparatrice 50 sont positionnées angulairement sur le mandrin pour respecter l'ordre des couches de la pile lors du bobinage.

Les figures 9 et 10 illustrent le positionnement de l'ensemble 63, complexe regroupant la bande porteuse 40, la bande de diffusion H₂ 30 et la bande isolante anodique 20 avec ses cales 5a, 5b; le positionnement du feuillard support 10 et le positionnement de la bande séparatrice cathodique ondulée 50 autour du mandrin. Le mandrin comporte des décrochements 81, 82 et 83 permettant de rattraper:
l'épaisseur de l'ensemble 63 pour le décrochement 81,
l'épaisseur de la bande séparatrice ondulée 50, schématisée sur la figure selon son enveloppe, pour le décrochement 82 et,
l'épaisseur du feuillard support 10 pour le décrochement 83.

Selon cet exemple; l'ensemble 63, le feuillard support 10 et la bande séparatrice 50 sont disposés à environ 120° les uns des autres sur le mandrin. Il est possible de prévoir des angles différents entre ces éléments et d'avoir par exemple un angle notamment entre 5° et 180° entre deux éléments.

Cette forme de mandrin comportant des décrochements permet d'obtenir dès le début du bobinage de la pile un enroulement homogène et d'épaisseur régulière comme représenté en figure 10 pour lequel le mandrin a effectué 3/4 de tour.

Le positionnement angulaire des dérouleurs par rapport au poste central est déterminé pour assurer de l'espace pour les postes de travail intermédiaires (poste permettant l'assemblage des dispositifs de connexion de début et de fin de pile, postes de coupe des bandes et feuillards constitutifs de la pile et poste d'assemblage du conduit au contact de l'enroulement positionné pour assurer que l'encollage de la bande porteuse et du conduit H2 se fasse sur le point de contact avec le mandrin.

Sur ces figures 9 et 10 est représenté une clé 84 d'entrainement du mandrin par un axe moteur d'une machine de bobinage.

Les figures 3 et 4 représentent schématiquement et dans les mêmes positions que les figures 9 et 10 les diverse constituants de la pile sur leurs dérouleurs, le dérouleur 1010 pour le feuillard support 10 et les dérouleurs 1020, 1030, 1040 respectivement pour la bande isolante anodique 20 éventuellement équipée des cales 5a, 5b, la bande de diffusion H₂ 30 et la bande porteuse 40 équipée des cellules électrochimiques autour du mandrin regroupant les sous ensembles 200, 300, 400. Sur ces figures, des galets 500 permettant d'appliquer correctement les couches sur le bobinage sont représentés.

La figure 5 représente schématiquement le raccordement d'un second module compartiment H_{2/}connexion électrique 310 de terminaison de la pile.

Ce module 310 de terminaison de la pile enroulée permet le raccordement électrique de la fin de pile et permet de terminer le canal hydrogène.

Ce dispositif comporte de la même façon que le module compartiment H₂/connexion électrique 70 de début de pile une lumière collectrice d'hydrogène en communication avec un second dispositif de raccordement fluidique 60'.

Le second module compartiment H_{2/}connexion électrique 310 est pourvu d'une face inférieure courbe épousant la surface de la fin de la pile et une face supérieure courbe sur laquelle vont appuyer des tours de terminaison de la pile comme il sera vu plus bas.

Les étapes d'enroulement de la pile selon le procédé de l'invention sont décrites schématiquement en référence aux figures 3 à 8.

Selon la figure 3, les sous ensemble 200, 300, 400 équipés de leurs bandes respectives issues des dérouleurs 1010, 1020, 1030, 1040 et 1050 sont montés sur un poste de bobinage 1000, les dérouleurs étant positionnés angulairement en sorte de respecter l'ordre de placement des couches sur le mandrin.

Selon les figures 4 et 13 le bobinage 600 est effectué sur le nombre de tours nécessaires pour obtenir le nombre de cellules unitaires correspondant à la tension électrique voulue de la pile.

Les bandes à positionner sont déroulées alors qu'une tension contrôlée du feuillard support par un dispositif de régulation de la tension 1100 asservie par rapport au rayon du mandrin permet d'appliquer une pression homogène sur les électrodes portées par la bande support de sorte que les cellules électrochimiques sont compressées entre le feuillard support 10 et la bande séparatrice ondulée 50 pour améliorer le contact électrique entre les couches des cellules électrochimiques et accroître le rendement de la pile. Le feuillard support agit ici comme un feuillard de compression.

La tension est calibrée de la manière suivante.

Soit T le vecteur tension au point d'arrivée du feuillard support 10 sur la pile, N la réaction du support à un instant donné pour un point M sur l'enroulement écarté d'un angle de rotation a par rapport à ce point d'arrivée et une rotation da, T(a)+T(a+da) + N(a)=0.

Sur l'axe u tangent à l'enroulement au point M on a: T(a+da).cos(da)-T(a)=0.

Sur l'axe y radial au point M on a: N(A)-T(a+da).sin(da)=0.

En approximation pour da petit cos(da)=1 et sin(da)=da ce qui donne sur l'axe u T(a+da)=T(a)=T et sur l'axe v: N(a)=T.da.

La réaction normale du support s'exprime C(a).dS C(a) étant la compression radiale et dS l'unité de surface sur laquelle s'applique cette compression. dS s'exprime (R.da).I, R étant le rayon au point considéré et I étant la largeur du feuillard support.

Ainsi on obtient C(a).R(a).da.I=T.da d'où la tension nécessaire T=C(a).R(a).I, la tension du feuillard support est proportionnelle au rayon de la pile pendant son enroulement pour obtenir une compression constante entre les couches de l'enroulement.

Pour permettre l'asservissement de la tension du feuillard support 10, un capteur tel qu'un capteur optique ou un détecteur à contact tel que schématisé sous la référence 1001 en figure 13 mesure en continu le rayon de la pile en cours de bobinage et asservit le moteur entraînant le mandrin au niveau de l'enrouleur 1000 et l'effort résistif appliqué par le dispositif frein 1100 au dérouleur 1010 du feuillard support 10.

L'enrouleur 1000 et le dérouleur 1010, dérouleur du feuillard support 10, sont réglés pour réaliser la tension de l'enroulement de la pile comme vu précédemment. Les dérouleurs 1020, 1030, 1040 respectivement dérouleur de la bande isolante anodique 20 équipée des cales d'épaisseur 21, de la bande de diffusion H₂ 30 et de la bande porteuse 40 sont réglés pour garder ces bandes suffisamment tendues pendant l'enroulement pour correctement les guider, éviter des défauts d'homogénéité de l'enroulement, assurer le bon assemblage des parties constitutives du conduit hydrogène et maintenir l'épaisseur du conduit hydrogène constante. Le dérouleur 1050 règle la tension de la bande séparatrice ondulée.

A titre d'exemple, les calculs sont effectués en partant des connaissances de l'homme du métier réalisant de cellules empilées. Pour ces cellules et notamment pour diminuer les pertes Ohmiques améliorer les contacts électriques et améliorer les caractéristiques des feutres sur les cellules unitaires et assurer l'étanchéité des joints des compartiments hydrogène, il est connu d'appliquer des pressions d'au moins 1 N/mm2 jusqu'à 5 N/mm2 .

Dans la présente invention ce rôle d'application de pression est dévolu au feuillard support.

Pour ce faire, le feuillard support est directement relié à l'axe de bobinage de la pile au moyen de la bride de maintien. L'effort de traction sur le feuillard support peut aller jusqu'à 10000 N dans le cas d'une pile ayant une largeur de bandes de pile entre 50 mm et 100 mm et un rayon jusqu'à 50 mm, ces valeur pouvant être encore plus importantes si les dimensions de la pile augmentent.

De ce fait asservir la tension du feuillard pendant l'enroulement est un aspect important du procédé de l'invention pour accroître le rendement de la pile. Pour de telles tensions un feuillard support acier, acier inox, fibre carbone/kevlar (poly(p-phénylènetéréphtalamide) (PPD-T)) sera privilégié par rapport à un feuillard aluminium.

Comme vu plus haut, la figure 5 représente l'assemblage de la fin du canal H₂ et la connexion électrique de fin de bande sur le second module compartiment H_{2/}connexion électrique 310.

Les bande isolante anodique 20, bande de diffusion H₂ 30 et bande porteuse 40 sont coupées sur un poste de réalisation du dispositif de terminaison de pile qui comporte ledit second module avant d'être raccordées sur ce dispositif de terminaison de pile. Le raccordement se fait en conservant l'étanchéité du canal H₂ qui est mis en communication avec le dispositif de raccordement fluidique 60' alors que la dernière cellule de la bande est électriquement raccordée à un second contact électrique 61'. Une fois le raccordement fait, les terminaisons de bande et le second module s'appliquent sur la pile bobinée.

A la figure 6, la bande séparatrice ondulée est coupée pour venir s'appliquer sur la fin de bande porteuse 40 apparente et, à la figure 7, un ou plusieurs tours supplémentaires du feuillard support 10 sont effectués pour consolider et protéger la pile et à la figure 8 le feuillard support 10 est coupé et sa fin est par exemple collée sur l'extérieur de la pile.

La figure 11 schématise la pile enroulée et les éléments fonctionnels la constituant. Au niveau du mandrin se retrouve la bride de maintien 11 ici en deux parties 11a, 11b entre lesquelles vient se positionner le feuillard support. Au dessus de la bride de maintien se trouve le module compartiment H_{2/}connexion électrique 70 comportant un premier sous ensemble 70a de raccordement électrique de la première électrode de la pile avec le premier contact électrique 61 et un second sous ensemble 70b réalisant un premier compartiment H₂ pourvu du dispositif de raccordement fluidique répartiteur H₂ 60 d'arrivée ou de départ d'hydrogène sur lequel est relié de manière étanche le canal anodique constitué avec le début de la bande isolante anodique, de la bande de diffusion H₂ et d'une première extrémité de la bande porteuse. Au dessous de la bride de maintien se trouve l'élément support cathode 74 sur lequel est fixée la bande séparatrice cathodique ondulée.

Autour du mandrin se trouvent les couches bobinées 601.

Sur les couches bobinées se trouve second module compartiment H_{2/}connexion électrique 310 de terminaison de la pile. Ce dernier est lui aussi ici représenté en sous ensembles.

Il comporte selon cette figure 11 en partie inférieure un élément de support 310a qui épouse la courbure de la pile. Au dessus de cet élément support se trouve un second dispositif de raccordement fluidique répartiteur H₂ 310b pourvu d'un canal d'arrivée ou de départ d'hydrogène 60 débouchant dans un canal de distribution H₂ sur lequel est relié de manière étanche la fin du canal anodique constitué avec la fin de la bande isolante anodique, de la bande de diffusion H₂ et d'une seconde extrémité de la bande porteuse.

Au sommet du second compartiment H₂ est représenté un compartiment électrique 310c reliant la dernière électrode de l'enroulement de polarité opposée à la première avec le second contact électrique 61'.

Un exemple de machine de fabrication de piles à combustible enroulées permettant de mettre en œuvre le procédé de l'invention est schématisée à la figure 13.

La machine comporte un dispositif de bobinage central 100, des dévidoirs de bandes 1010, 1020, 1030, 1040, 1050 répartis angulairement autour du dispositif de bobinage central et des postes de travail 1110, 1120, 1130 sur les bandes entre les dévidoirs et le dispositif de bobinage central. Les dévidoirs sont à tension contrôlée pour permettre un bobinage régulier des diverses couches de la pile, le dévidoir 1010 distribuant le feuillard support étant contrôlé en tension en fonction de la rotation du dispositif de bobinage pour assurer la compression constante sur les couches comme vu plus haut.

Pour récupérer d'éventuels films de protection des bandes, des enrouleurs 1021, 1041 et 1051 sont prévus.

Un premier poste de travail 1110 comporte des moyens 1110a de pose de la bride de maintien sur le feuillard support 10 et des moyens 1110b de coupe de la fin dudit feuillard. Un deuxième poste de travail 1120 comporte des moyens 1120a d'une part d'assemblage du premier sous ensemble 300 pour réaliser la connexion électrique et le raccordement H₂ du coeur de pile et d'autre part d'assemblage du second module compartiment H_{2/}connexion électrique 310 pour réaliser le raccordement de fin de pile. Ce poste comporte en outre des moyens de coupe 1120b des bande isolante anodique 20, bande de diffusion H₂ 30 et bande porteuse 40 en fin de réalisation de la pile. Un troisième poste de travail 1130 comporte des moyens 1130a de réalisation du troisième sous ensemble avec la bande séparatrice cathodique ondulée 50 et de moyens de coupe 1130b pour couper cette bande séparatrice en fin de bande.

Le positionnement angulaire des dérouleurs 1010, 1020, 1030, 1040 et 1050 par rapport au poste central est déterminé pour assurer de l'espace pour les postes de travail intermédiaires, poste permettant l'assemblage des dispositifs de connexion de début et de fin de pile, postes de coupe des bandes et feuillards constitutifs de la pile et poste d'assemblage du conduit au contact de l'enroulement positionné pour assurer que l'encollage de la bande porteuse et du conduit H2 se fasse sur le point de contact avec le mandrin.

Le feuillard support 10 et la bande séparatrice cathodique ondulée 50 sont réalisés dans des matériaux conducteurs thermiques adaptés à être bobinés et préférablement des matériaux métalliques pour éviter toute extension de ces éléments lors du bobinage.

La bande isolante anodique 20 est avantageusement réalisée au moyen d'un film plastique peu extensible comme par exemple un film de polyimide ou aramide, PET (poly(téréphtalate d'éthylène), PEN (Poly(naphtalate d'éthylène)), PE (polyéthylène). La bande de diffusion H₂ est notamment réalisée en matériau plastique et sous forme d'un tissu à mailles larges ou d'une grille qui peut comporter des fils de trame et des fils de chaîne. La bande porteuse 40 est un complexe multicouche.

L'invention définie par les revendications n'est pas limitée à l'exemple représenté et notamment la disposition des sous ensembles du mandrin peut être décalée angulairement et les sous ensembles peuvent être réalisés chacun en une ou plusieurs parties.

## Revendications

1. Procédé de fabrication d'une pile à combustible enroulée comprenant:
- un feuillard support (10),
- une bande isolante anodique (20),
- une bande de diffusion H₂ (30),
- une bande porteuse (40) de cellules électrochimiques (41) dont les anodes (A) sont d'un premier côté de la bande porteuse et les cathodes (K) d'un second côté de la bande porteuse, et
- une bande séparatrice cathodique ondulée (50),
**caractérisé en ce qu'**il comprend:
- une étape de réalisation d'un mandrin de bobinage comportant un dispositif de raccordement fluidique H₂ et de raccordement électrique d'une première extrémité de la pile et comportant l'assemblage d'une extrémité de début du feuillard support (10) avec une bride de maintien (11, 11a, 11b) solidaire d'un axe de bobinage de la pile, le mandrin équipé de la bride de maintien recevant des premières terminaisons desdits feuillard support (10), bande isolante anodique (20), bande de diffusion H₂ (30), bande porteuse (40) de cellules électrochimiques et bande séparatrice cathodique ondulée (50),
- une étape de bobinage de la pile pour laquelle la tension du feuillard support entre un dérouleur et le mandrin est asservie en sorte d'appliquer une pression calibrée sur les couches bobinées de la pile.

2. Procédé selon la revendication 1 pour lequel l'ensemble bande porteuse (40), bande de diffusion H₂ (30) et bande isolante anodique (20) est assemblé et collé en continu au niveau de son accostage sur le bobinage pendant l'enroulement de la pile.

3. Procédé selon la revendication 2 pour lequel la tension du feuillard support est proportionnelle au rayon de la pile pendant son enroulement pour obtenir une compression constante entre les couches de l'enroulement.

4. Procédé selon la revendication 1, 2 ou 3 pour lequel l'étape de réalisation du mandrin comporte:
- une étape de réalisation d'un premier sous ensemble (200) comportant l'assemblage d'une extrémité de début du feuillard support (10) avec une bride de maintien (11, 11a, 11b) solidaire d'un axe de bobinage de la pile,
- une étape de réalisation d'un deuxième sous ensemble (300) comportant l'assemblage d'une première extrémité de début de la bande isolante anodique (20), d'une première extrémité de la bande de diffusion H₂ (30) et d'une première extrémité de la bande porteuse (40) des cellules (41) avec un dispositif de raccordement fluidique répartiteur H₂ (60) et la réalisation d'un dispositif de connexion électrique d'une première électrode d'une première cellule de la bande porteuse avec un premier contact électrique (61) sur un module compartiment H₂/connexion électrique (70),
- une étape de réalisation d'un troisième sous ensemble (400) comprenant l'assemblage de la bande séparatrice cathodique ondulée (50) sur un élément support cathode (74),
- une étape d'assemblage desdits sous ensembles, les deuxième (300) et troisième (400) sous ensembles étant assemblés de part et d'autre du premier sous ensemble (200) pour former un mandrin (500) autour duquel la pile est enroulée, le feuillard support étant relié au centre du mandrin en sorte d'assurer la tension de l'enroulement et homogène.

5. Procédé selon la revendication 1, 2, 3 ou 4 pour lequel, le dispositif de raccordement fluidique répartiteur H₂ (60) étant pourvu d'au moins une lumière de distribution d'hydrogène (62), l'assemblage du deuxième sous ensemble comprend l'assemblage étanche de l'extrémité de début de l'ensemble bande porteuse (40), bande de diffusion H₂ (30) et bande isolante anodique (20) sur ledit dispositif en communication avec la lumière pour réaliser le début d'un canal hydrogène côté anodes de la bande porteuse.

6. Procédé selon l'une quelconque des revendications précédentes pour lequel les positions d'accostage du feuillard support (10), de l'ensemble bande isolante anodique (20), bande de diffusion H₂ (30), bande porteuse (40) de cellules et de la bande séparatrice cathodique ondulée (50) sont décalées angulairement.

7. Procédé selon l'une quelconque des revendications précédentes, comprenant une étape de bobinage (600) de la pile sur le nombre de tours choisi en fonction de la tension électrique de sortie souhaitée pour la pile.

8. Procédé selon la revendication 7, comprenant, une fois le bobinage terminé:
- une étape de coupe d'une extrémité de fin de la bande isolante anodique, de la bande de diffusion H₂ et de la bande porteuse des cellules électrochimiques;
- une étape d'assemblage de ces extrémités sur un second module compartiment H_{2/}connexion électrique (310) de terminaison de pile comportant un second dispositif de raccordement fluidique répartiteur H₂ (60') réalisant la fermeture du canal fluidique H₂;
- une étape de raccordement de la dernière électrode de la dernière cellule de la bande porteuse de polarité opposée à ladite première électrode avec un second contact électrique (61') porté par ledit second module, et
- une étape de positionnement dudit second module sur la pile enroulée.

9. Procédé selon la revendication 8 pour lequel, une fois le second module positionné sur la pile, la rotation du mandrin est poursuivie (610) pour recouvrir ledit second module compartiment H_{2/}connexion électrique (310) avec la bande séparatrice ondulée et avec le feuillard support.

10. Procédé selon la revendication 9, comprenant une étape de coupe de la bande séparatrice ondulée et de réalisation d'au moins un tour supplémentaire avec le feuillard support (10) encollé en sorte de créer une enveloppe de protection de la pile avant de couper (340) ledit feuillard support (10) pour finaliser la pile à combustible.

11. Procédé selon l'une quelconque des revendications 8 à 10, pour lequel le second module compartiment H_{2/}connexion électrique (310) est monté sur une embase (80) s'appliquant sur la pile enroulée.

12. Dispositif d'enroulement d'une pile à combustible selon le procédé de l'une quelconque des revendications précédentes, comportant un mandrin regroupant une bride de maintien (11, 11a, 11b) pourvue d'un axe de bobinage adaptée à recevoir le feuillard support (10) de la pile, un module compartiment H₂/connexion électrique (70) de réception d'une première extrémité de début de la bande isolante anodique (20), d'une première extrémité de la bande de diffusion H₂ (30) et d'une première extrémité de la bande porteuse (40) des cellules (41), pourvu d'un premier dispositif de raccordement fluidique répartiteur H₂ (60) et d'un dispositif de connexion électrique d'une première électrode d'une première cellule de la bande porteuse avec un premier contact électrique (61), un élément support cathode (74) de réception de la bande séparatrice ondulée (50).

13. Dispositif d'enroulement selon la revendication 12 pour lequel le mandrin comporte à sa surface un ou plusieurs décrochements (81, 82, 83) au niveau des arrivées des bandes et feuillards.

14. Dispositif d'enroulement selon la revendication 12 ou 13 pour lequel le dispositif de raccordement fluidique répartiteur H₂ (60) est pourvu d'au moins une lumière de distribution d'hydrogène (62) et des moyens d'assemblage étanche de l'extrémité de début de l'ensemble bande porteuse (40), bande de diffusion H₂ (30) et bande isolante anodique (20) sur ledit dispositif en communication avec la lumière.

15. Dispositif d'enroulement selon la revendication 12, 13 ou 14, comprenant un second module compartiment H_{2/}connexion électrique (310) de terminaison de pile comportant un second dispositif de raccordement fluidique répartiteur H₂ (60') réalisant la fermeture du canal fluidique H₂ et un second contact électrique (61') porté par ledit second module.

## Patentansprüche

1. Verfahren zur Herstellung einer gewickelten Brennstoffzelle, umfassend:
- eine Trägerfolie (10),
- ein anodisches Isolierband (20),
- ein H₂-Diffusionsband (30),
- ein Trägerband (40) elektrochemischer Zellen (41), deren Anoden (A) auf einer ersten Seite des Trägerbands sind und die Kathoden (K) auf einer zweiten Seite des Trägerbands, und
- ein gewelltes kathodisches Trennband (50),
**dadurch gekennzeichnet, dass** es umfasst:
- einen Schritt des Herstellens eines Wickelkerns, aufweisend eine H₂-Fluidanschlussvorrichtung und zum elektrischen Anschluss eines ersten Endes der Zelle und aufweisend die Verbindung eines Anfangsendes der Trägerfolie (10) mit einem Halteflansch (11, 11a, 11b), der mit einer Wickelachse der Zelle fest verbunden ist, wobei der mit dem Halteflansch ausgestattete Kern erste Endigungen der Trägerfolie (10), des anodischen Isolierbands (20), des H₂-Diffusionsbands (30), des Trägerbands (40) elektrochemischer Zellen und des gewellten kathodischen Trennbands (50) aufnehmen,
- einen Schritt des Wickelns der Zelle, für den die Spannung der Trägerfolie zwischen einem Abwickler und dem Kern derart eingestellt ist, dass ein kalibrierter Druck auf die gewickelten Schichten der Zelle ausgeübt wird.

2. Verfahren nach Anspruch 1, wobei die Einheit Trägerband (40), H₂-Diffusionsband (30) und anodisches Isolierband (20) im Bereich seines Andockens auf der Wicklung während des Wickelns der Zelle kontinuierlich verbunden und verklebt wird.

3. Verfahren nach Anspruch 2, wobei die Spannung der Trägerfolie proportional zum Radius der Zelle während ihres Wickelns ist, um eine konstante Kompression zwischen den Wickelschichten zu erhalten.

4. Verfahren nach Anspruch 1, 2 oder 3, wobei der Schritt der Herstellung des Kerns aufweist:
- einen Schritt des Herstellens einer ersten Untereinheit (200), aufweisend das Verbinden eines Anfangsendes der Trägerfolie (10) mit einem Halteflansch (11, 11a, 11b), der mit einer Wickelachse der Zelle fest verbunden ist,
- einen Schritt des Herstellens einer zweiten Untereinheit (300), aufweisend das Verbinden eines ersten Anfangsendes des anodischen Isolierbands (20), eines ersten Endes des H₂-Diffusionsbands (30) und eines ersten Endes des Trägerbands (40) der Zellen (41) mit einer H₂-Fluidverteileranschlussvorrichtung (60) und des Herstellens einer elektrischen Verbindungsvorrichtung einer ersten Elektrode einer ersten Zelle des Trägerbands mit einem ersten elektrischen Kontakt (61) auf einem Modul H₂-Kammer/elektrische Verbindung (70),
- einen Schritt des Herstellens einer dritten Untereinheit (400), aufweisend das Verbinden des gewellten kathodischen Trennbands (50) auf einem Kathodenträgerelement (74),
- einen Schritt des Verbindens der Untereinheiten, wobei die zweite (300) und dritte (400) Untereinheit beiderseits der ersten Untereinheit (200) verbunden sind, um einen Kern (500) zu bilden, um den die Zelle gewickelt ist, wobei die Trägerfolie gleichmäßig und mit dem Zentrum des Kerns derart verbunden ist, dass die Spannung der Wicklung gewährleistet ist.

5. Verfahren nach Anspruch 1, 2, 3 oder 4 wobei, wobei die H₂-Fluidverteileranschlussvorrichtung (60) mit mindestens einem Wasserstoffverteilerschlitz (62) versehen ist, die Verbindung der zweiten Untereinheit die dichte Verbindung des Anfangsendes der Einheit Trägerband (40), H₂-Diffusionsband (30) und anodisches Isolierband (20) auf der Vorrichtung in Kommunikation mit dem Schlitz umfasst, um den Anfang eines anodenseitigen Wasserstoffkanals des Trägerbands herzustellen.

6. Verfahren nach einem der vorangehenden Ansprüche, wobei die Andockpositionen der Trägerfolie (10), der Einheit anodisches Isolierband (20), H₂-Diffusionsband (30), Zellen-Trägerband (40) und des gewellten kathodischen Trennbands (50) winklig versetzt sind.

7. Verfahren nach einem der vorangehenden Ansprüche, umfassend einen Schritt des Wickelns (600) der Zelle in der in Abhängigkeit von der für die Zelle gewünschten elektrischen Ausgangsspannung gewählten Anzahl von Umdrehungen.

8. Verfahren nach Anspruch 7, umfassend, nach Beendigung des Wickelns:
- einen Schritt des Schneides eines Endendes des anodischen Isolierbands, des H₂-Diffusionsbands und des Trägerbands der elektrochemischen Zellen;
- einen Schritt des Verbindens dieser Enden auf einem zweiten zellterminalen Modul H₂-Kammer/elektrische Verbindung (310), aufweisend eine zweite H₂-Fluidverteileranschlussvorrichtung (60'), die den H₂-Fluidkanal verschließt;
- einen Schritt des Anschließens der letzten Elektrode der letzten Zelle des Trägerbands entgegengesetzter Polarität an die erste Elektrode mit einem zweiten elektrischen Kontakt (61'), getragen von dem zweiten Modul, und
- einen Schritt des Positionierens des zweiten Moduls auf der gewickelten Zelle.

9. Verfahren nach Anspruch 8, wobei, nachdem das zweite Modul auf der Zelle positioniert ist, die Rotation des Kerns fortgesetzt wird (610), um das zweite Modul H₂-Kammer/elektrische Verbindung (310) mit dem gewellten Trennband und mit der Trägerfolie abzudecken.

10. Verfahren nach Anspruch 9, umfassend einen Schritt des Schneidens des gewellten Trennbands und des Herstellens mindestens einer zusätzlichen Umdrehung mit der verklebten Trägerfolie (10), um vor dem Abschneiden (340) der Trägerfolie (10) zwecks Fertigstellung der Brennstoffzelle eine Schutzhülle der Zelle zu bilden.

11. Verfahren nach einem der Ansprüche 8 bis 10, wobei das zweite Modul H₂-Kammer/elektrische Verbindung (310) auf einer Basis (80) angebracht ist, die auf der gewickelten Zelle anliegt.

12. Wickelvorrichtung einer Brennstoffzelle gemäß dem Verfahren nach einem der vorangehenden Ansprüche, aufweisend einen Kern, der einen mit einer Wickelachse versehenen Halteflansch (11, 11a, 11b), der zur Aufnahme der Trägerfolie (10) der Zelle geeignet ist, ein Modul H₂-Kammer/elektrische Verbindung (70) zur Aufnahme eines ersten Anfangsendes des anodischen Isolierbands (20), eines ersten Endes des H₂-Diffusionsbands (30) und eines ersten Endes des Trägerbands (40) der Zellen (41), versehen mit einer ersten H₂-Fluidverteileranschlussvorrichtung (60) und einer elektrischen Verbindungsvorrichtung einer ersten Elektrode einer ersten Zelle des Trägerbands mit einem ersten elektrischen Kontakt (61), ein Kathodenträgerelement (74) zur Aufnahme des gewellten Trennbands (50) zusammenfasst.

13. Wickelvorrichtung nach Anspruch 12, wobei der Kern auf seiner Oberfläche einen oder mehrere Rücksprünge (81, 82, 83) im Bereich der Aufnahmen der Bänder und Folien aufweist.

14. Wickelvorrichtung nach Anspruch 12 oder 13, wobei die H₂-Fluidverteileranschlussvorrichtung (60) mit mindestens einem Wasserstoffverteilerschlitz (62) und dichten Verbindungsmitteln des Anfangsendes der Einheit Trägerband (40), H₂-Diffusionsband (30) und anodisches Isolierband (20) auf der Vorrichtung in Kommunikation mit dem Schlitz versehen ist.

15. Wickelvorrichtung nach Anspruch 12, 13 oder 14, umfassend ein zweites zellterminales Modul H₂-Kammer/elektrische Verbindung (310), aufweisend eine zweite H₂-Fluidverteileranschlussvorrichtung (60'), welche den H₂-Fluidkanal verschließt, und einen zweiten elektrischen Kontakt (61'), getragen von dem zweiten Modul.

## Claims

1. Method for manufacturing a wound fuel cell comprising:
- a supporting strip (10),
- an anodic insulating band (20),
- a H₂ diffusion band (30),
- a electrochemical cell (41) carrying band (40), the anodes (A) of which are on a first side of the carrier band and the cathodes (K) of which are on a second side of the carrier band, and
- a corrugated cathodic separating band (50),
**characterised in that** it comprises:
- a step of producing a winding mandrel including a device for H₂ fluid connection and for electric connection of a first end of the cell and including assembling a start end of the supporting strip (10) to a holding flange (11, 11a, 11b) integral with a winding spindle of the cell, the mandrel provided with the holding flange receiving first endings of said supporting strip (10), anodic insulating band (20), H₂ diffusion band (30), electrochemical cell carrying band (40) and corrugated cathodic separating band (50),
- a step of winding the cell for which the tension of the supporting strip between an unwinder and the mandrel is controlled so as to apply a calibrated pressure to the wound layers of the cell.

2. Method according to claim 1 wherein the carrier band (40), H₂ diffusion band (30) and anodic insulating band (20) assembly is assembled and bonded continuously at the engagement thereof on the winding when winding the cell.

3. Method according to claim 2 wherein the tension of the supporting strip is proportional to the radius of the cell during the winding thereof to obtain constant compression between the layers of the winding.

4. Method according to claim 1, 2 or 3 wherein the step of producing the mandrel includes:
- a step of producing a first sub-assembly (200) including assembling a start end of the supporting strip (10) to a holding flange (11, 11a, 11b) integral with a winding spindle of the cell,
- a step of producing a second sub-assembly (300) including assembling a first start end of the anodic insulating band (20), a first end of the H₂ diffusion band (30) and a first end of the cell (41) carrying band (40) with a H₂-distributing fluid connection device (60) and producing a device for electrically connecting a first electrode of a first cell of the carrier band to a first electric contact (61) on a H₂ compartment/electrical connection module (70),
- a step of producing a third sub-assembly (400) comprising assembling the corrugated cathodic separating band (50) on a cathode supporting element (74),
- a step of assembling said sub-assemblies, the second (300) and third (400) sub-assemblies being assembled on either side of the first sub-assembly (200) to form a mandrel (500) about which the cell is wound, the supporting strip being linked to the centre of the mandrel to ensure the tension of the winding and homogeneous.

5. Method according to claim 1, 2, 3 or 4 wherein, with the H₂-distributing fluid connection device (60) being provided with at least one hydrogen distribution slot (62), the assembly of the second sub-assembly comprises assembling, in a sealed manner, the start end of the carrier band (40), H₂ diffusion band (30) and anodic insulating band (20) assembly on said device in communication with the slot to produce the start of a hydrogen channel on the anode side of the carrier band.

6. Method according to any one of the preceding claims wherein the engagement positions of the supporting strip (10), of the anodic insulating band (20), H₂ diffusion band (30), cell-carrier band (40) assembly, and of the corrugated cathodic separating band (50) are angularly offset.

7. Method according to any one of the preceding claims, comprising a step of winding (600) the cell for a number of revolutions selected as a function of the desired electrical output voltage for the cell.

8. Method according to claim 7, comprising, once winding is complete:
- a step of cutting a tail end of the anodic insulating band, of the H₂ diffusion band and of the electrochemical cell carrying band;
- a step of assembling these ends on a second cell terminal H₂ compartment/electrical connection module (310) including a second H₂-distributing fluid connection device (60') closing the H₂ fluid channel;
- a step of connecting the last electrode of the last cell of the carrier strip of opposite polarity to said first electrode to a second electric contact (61') carried by said second module, and
- a step of positioning said second module on the wound cell.

9. Method according to claim 8 wherein, once the second module is positioned on the cell, the rotation of the mandrel is continued (610) to cover said second H₂ compartment/electrical connection module (310) with the corrugated separating band and with the supporting strip.

10. Method according to claim 9, comprising a step of cutting the corrugated separating band and of carrying out at least one additional revolution with the bonded supporting strip (10) so as to create a cell protecting enclosure for the cell before cutting (340) said supporting strip (10) to finalise the fuel cell.

11. Method according to any one of claims 8 to 10 wherein the second H₂ compartment/electrical connection module (310) is mounted on a base (80) applied to the wound cell.

12. Device for winding a fuel cell according to the method of any one of the preceding claims, including a mandrel grouping together a supporting flange (11, 11a, 11b) provided with a winding spindle adapted to receive the supporting strip (10) of the cell, a H₂ compartment/electrical connection module (70) for receiving a first start end of the anodic insulating band (20), a first end of the H₂ diffusion band (30) and a first end of the cell (41) carrying band (40), provided with a first H₂-distributing fluid connection device (60) and a device for electrically connecting a first electrode of a first cell of the carrier band to a first electric contact (61), a cathode supporting element (74) for receiving the corrugated separating band (50).

13. Winding device according to claim 12 wherein the mandrel includes at the surface thereof one or more discontinuities (81, 82, 83) at the band and strip inlets.

14. Winding device according to claim 12 or 13 wherein the H₂-distributing fluid connection device (60) is provided with at least one hydrogen distribution slot (62) and means for assembling, in a sealed manner, the start end of the carrier band (40), H₂ diffusion band (30) and anodic insulating band (20) assembly on said device in communication with the slot.

15. Winding device according to claim 12, 13 or 14, comprising a second cell terminal H₂ compartment/electrical connection module (310) including a second H₂-distributing fluid connection device (60') closing the H₂ fluid channel and a second electric contact (61') carried by said second module.
